# EUROPÄISCHE PATENTSCHRIFT

(11) **EP 0 672 836 B1**
(45) Veröffentlichungstag und Bekanntmachung des Hinweises auf die Patenterteilung: **12.08.1998**
(21) Anmeldenummer: 94118062.2
(22) Anmeldetag: 15.11.1994
(51) Int. Cl.: F16B 5/06

(54) **Befestigungsvorrichtung**
Fixing device
Dispositif de fixation

(30) Priorität: 22.02.1994 FR 9401978
(43) Veröffentlichungstag der Anmeldung: 20.09.1995
(73) Patentinhaber: TRW CARR FRANCE SNC, 67340 Ingwiller (FR)
(72) Erfinder: Doré, Pascal, F-67500 Haguenau (FR); Klein, Jean-Luc René G., F-67350 Ringendorf (FR)
(74) Vertreter: Schieschke, Klaus, Dipl.-Ing.

(56) Entgegenhaltungen:
- DE-A- 1 949 238
- DE-A- 2 626 140
- DE-A- 3 029 845
- FR-A- 1 452 925
- FR-A- 2 300 928
- GB-A- 2 082 668

## Beschreibung

Die Erfindung bezieht sich auf eine Befestigungsvorrichtung zum Befestigen einer Wandverkleidung an einem Karosserieteil eines Kraftfahrzeuges, mit einem in einer Öffnung des Karosserieteils einsetzbaren, gegenüberliegende federnde Befestigungsarme aufweisenden Steckelement mit umlaufender flanschartiger kegelstumpfförmiger Dichtlippe und mit einem oberhalb der Dichtlippe angeordnetem Kopfteil sowie mit einem die Platte halternden Buchsenelement, in dessen zentrische Öffnung das Kopfteil des Steckelements einsetzbar ist, wobei
die zentrische Öffnung des Buchsenelements mindestens einen Haltering aufweist,
das Buchsenelement mit zwei im axialen Abstand voneinander liegenden Flanschen versehen ist,
der der Dichtlippe des Steckelements zugeordnete Bereich der zentrischen Öffnung des Buchsenelements dem Außenprofil der Dichtlippe angepaßt ist, und vier über den Umfang der zentrischen Öffnung verteilte Nuten vorgesehen sind, welche sich bis zu dem dem Außenprofil der Dichtlippe angepaßten Bereich erstrecken.

Als Stand der Technik ist aus der GB-A-2 082 668 bereits eine derartige Konstruktion bekannt, bei welcher das Kopfteil in Form einer Kugel ausgebildet ist, die sich hinter einem Haltering in einer Öffnung des Buchsenelements einlagert, wobei der Haltering der Dichtlippe des Steckelements benachbart und durch vier Nuten in vier Zungen unterteilt ist. Bei dieser bekannten Konstruktion besteht nicht die Möglichkeit eines Toleranzausgleiches, beispielsweise zwischen einem Karosserieteil eines Kraftfahrzeugs als Träger und einer Platte, insbesondere einer Wandverkleidung. Darüber hinaus ist diese bekannte Konstruktion so ausgebildet, daß beim Einsatz störende Geräusche auftreten können, was sich insbesondere auf den Fahrkomfort eines Kraftfahrzeuges auswirkt.

Bei einer weiteren gattungsähnlichen Befestigungsvorrichtung (DE-A-1 949 238) ist ein zylinderförmiges Kopfteil des Steckelements am Außenumfang mit mehreren Halterippen versehen und in der zentrischen Öffnung des Buchsenelements sind mehrere Halteringe angeordnet. Dies ergibt die Möglichkeit das Buchsenelement auf dem Steckelement in mehreren unterschiedlichen Stellungen zu verriegeln, je nachdem, wie es die Stärke der Polsterung oder der Verkleidungsplatte erfordert.

Bei einer anderen bekannten Konstruktion einer Befestigung für Abdeckplatten (DE-A-26 26 140) besteht das Befestigungselement aus drei voneinander unabhängigen Teilen, d.h. das Buchsenelement ist hierbei zweiteilig ausgebildet und übergreift mit seinen gegenläufig liegenden Flanschen die Ober- und die Unterseite einer Platte, insbesondere einer Wandverkleidung. Hierdurch ergibt sich ein erheblicher baulicher und kostenmäßiger Aufwand, was bei einem Massenerzeugnis wirtschaftlich nicht vertretbar ist. Auch die Handhabung bei der Montage ist relativ schwierig, um die drei Teile funktionsgerecht miteinander verbinden zu können.

Der vorliegenden Erfindung liegt demgegenüber die Aufgabe zugrunde, eine Befestigungsvorrichtung der eingangs genannten Art zu schaffen, welche so ausgebildet ist, daß bei gutem Toleranzausgleich zwischen zwei Plattenelementen auch eine verbesserte Geräuschreduzierung gewährleistet ist.

Diese Aufgabe wird erfindungsgemäß dadurch gelöst, daß das Kopfteil des Steckelements als Zylinder ausgebildet und am Außenumfang mit mehreren, in vertikalem Abstand voneinander liegenden Halterippen versehen ist, daß die zentrische Öffnung des Buchsenelements mindestens einen Haltering aufweist, mindestens eine der Halterippen des Kopfteils des Steckelements hinter dem mindestens einen Haltering des Buchsenelements einlagerbar ist, daß das Steckelement und das Buchsenelement aus zwei verschiedenen Kunststoffmaterialien bestehen und daß an der Unterseite der kegelstumpfförmig ausgebildeten Dichtlippe mindestens zwei einander gegenüberliegende, auf den Durchmesser der Öffnung des

Trägers abgestellte Zentriernasen angeordnet sind. Hierdurch ergibt sich der Vorteil, daß infolge des Zusammenwirkens zwischen den Halterippen des Steckelements und dem Haltering im Inneren des Buchsenelements ein guter Toleranzausgleich zwischen zwei Platten herstellbar ist. Durch die Zentriernasen wird das Steckelement in einer Öffnung des Trägers positioniert und gehaltert. Weiterhin wird eine zusätzliche Geräuschminderung erzielt, da das Steckelement und das Buchsenelement aus zwei verschiedenen Kunststoffmaterialien bestehen.

In weiterer Ausgestaltung der Erfindung kann das Kopfteil des Steckelements stirnseitig mit einer Einführschräge versehen sein, wobei zusätzlich der Mittelbereich des Zylinders des Kopfelements mit einander gegenüberliegenden Aussparungen ausgestattet ist.

Nach einem anderen Merkmal der Erfindung weisen die federnden Befestigungsarmen jeweils obere abgestufte Endbereiche auf, mit denen im Zusammenwirken mit den Zentriernasen das Steckelement einwandfrei in einer Öffnung des Trägers zentriert und gehaltert wird. Weiterhin kann erfindungsgemäß ein die beiden Befestigungsarme verbindender Mittelkörper mit zwei einander gegenüberliegenden, auf den Durchmesser der Öffnung des Trägers abgestellten Zentrierstegen versehen sein. Durch diese Zentrierstege wird gewährleistet, daß das gesamte Steckelement verschiebesicher innerhalb einer Öffnung eines Trägers angeordnet ist.

Hierbei kann der Mittelkörper stirnseitig einen schräg zulaufenden Einführungsbereich aufweisen, um die Montage mit einem Träger zu erleichtern.

In der zentrischen Öffnung können mehrere, in axialem Abstand voneinander entfernte Halteringe angeordnet sein, wodurch neben einer Verbesserung der Verbindung zwischen dem Steckelement und dem Buchsenelement im Zusammenwirken mit den Halterippen eine weitere Verbesserung des Toleranzausgleiches hergestellt wird.

Die Erfindung wird nachfolgend anhand eines in der Zeichnung dargestellten Ausführungsbeispiels näher beschrieben. In der Zeichnung zeigen:
- Fig. 1: eine Seitenansicht des erfindungsgemäßen Steckelements;
- Fig. 2: eine Draufsicht auf das Steckelement nach Anspruch 1;
- Fig. 3: einen Längsschnitt durch ein Buchsenelement;
- Fig. 4: eine Draufsicht auf das Buchsenelement gemäß Fig. 3;
- Fig. 5: eine vormontierte Einheit, bestehend aus Steckelement und geschnittenem Buchsenelement bei einer Befestigungsvorrichtung;
- Fig. 6: die zusammengebaute Einheit der Befestigungsvorrichtung, bestehend aus Steckelement und geschnittenem Buchsenelement.

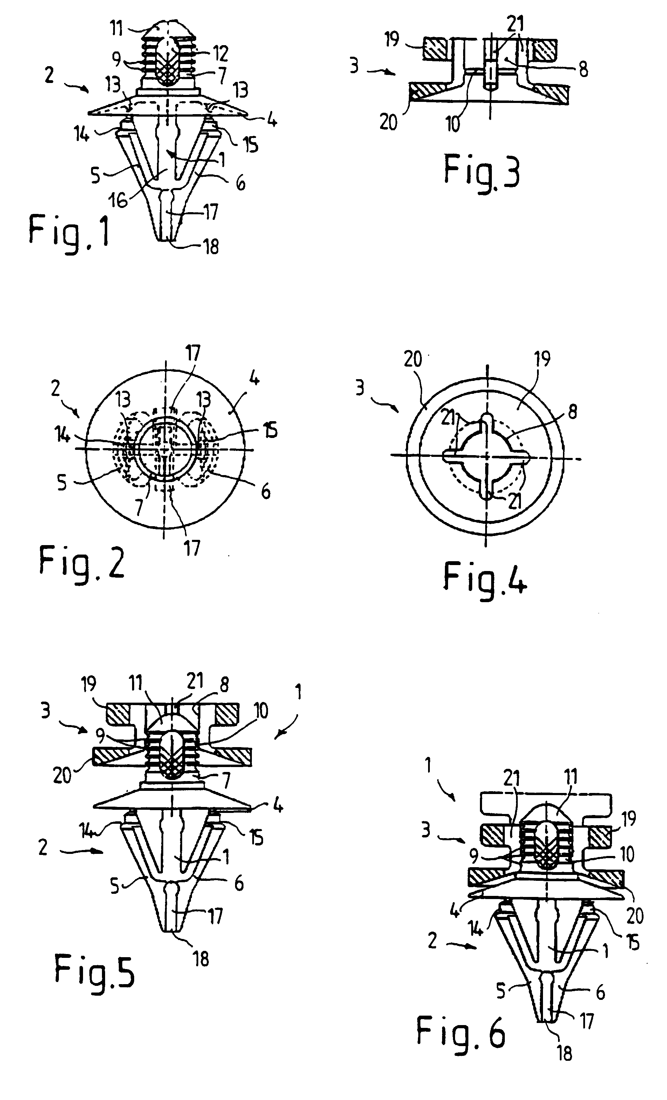

Die Befestigungsvorrichtung 1 (Fig. 6) besteht im wesentlichen aus einem Steckelement 2 nach Fig. 1 und 2 und einem Buchsenelement 3, nach Fig. 3 und 4.

Das Steckelement 1 ist in eine Öffnung eines nicht näher dargestellten Trägers einsteckbar. Hierzu weist das Steckelement 2 zwei einander gegenüberliegende, federnde Befestigungsarme 5 und 6 auf, oberhalb welchen sich eine umlaufende, flanschartige, federnde Dichtlippe 4 befindet. An diese Dichtlippe 4 schließt sich nach oben ein Kopfteil 7 an, welches als Zylinder ausgebildet ist. Am Außenumfang des Zylinders sind mehrere, in vertikalem Abstand voneinander liegende Halterippen 9 vorgesehen. Weiterhin ist das Kopfteil 7 des Steckelements 2 stirnseitig mit einer Einführschräge 11 versehen, um eine Montageerleichterung zu schaffen.

Der Mittelbereich des Zylinders des Kopfteils 7 ist mit einander gegenüberliegenden Aussparungen 12 versehen. Diese bewirken eine bessere Maßstabilität, geringeres Nachschwinden, kürzeren Spritzzyklus beim Herstellen und Materialeinsparung.

Wie aus Fig. 1 ersichtlich, sind an der Unterseite der kegelstumpfförmig ausgebildeten Dichtlippe 4 mindestens zwei einander gegenüberliegende, auf den Durchmesser der Öffnung eines nicht näher dargestellten Trägers abgestellte Zentriernasen 13 angeordnet.

Die beiden Befestigungsarme 5 und 6 werden durch einen Mittelkörper 16 verbunden, welcher mit zwei einander gegenüberliegenden, gleichfalls auf den Durchmesser der Öffnung des Trägers abgestellten Zentrierstegen 17 versehen ist. Die beiden federnden Befestigungsarme 5 und 6 weisen nach Fig. 1 jeweils abgestufte obere Endbereiche 14 und 15 auf, welche in den Bereich der Zentriernasen 13 ragen.

Hierdurch ist es möglich, entsprechend dem Durchmesser der Öffnung des Trägers eine sichere Haltewirkung zu erreichen, wobei die abgestuften Endbereiche der federnden Arme 5, 6 sich sicher hinter oder in der Trägeröffnung einlagern. Die Trägeröffnung ihrerseits wird durch die umlaufende federnde Dichtlippe 4 einwandfrei abgeschlossen.

Aus Fig. 1 geht weiterhin hervor, daß der Mittelkörper 16 stirnseitig einen schräg zulaufenden Einführungsbereich 18 besitzt, so daß das Steckelement 2 einfach in eine Trägeröffnung eingesetzt werden kann.

Das in Fig. 3 und 4 dargestellte Buchsenelement 3 ist mit zwei im axialen Abstand voneinander liegenden Flanschen 19 und 20 versehen, welche eine zentrische Öffnung 8 umschließen. Diese zentrische Öffnung 8 des Buchsenelements 3 ist auf den Zylinder, d.h. das Kopfteil 7 des Steckelements 2 abgestellt. Wie aus Fig. 3 und 4 ersichtlich, weist die zentrische Öffnung 8 des Buchsenelements 3 einen umlaufenden Haltering 10 auf. In nicht näher dargestellter Weise können auch mehrere Halteringe 10 in axialem Abstand am Innenumfang der zentrischen Öffnung 8 des Buchsenelements 3 angeordnet sein.

Aus Fig. 3 und 4 geht darüber hinaus hervor, daß der der Dichtlippe 4 des Steckelements 2 zugewandte Bereich der zentrischen Öffnung 8 dem Außenprofil der Dichtlippe 4 angepaßt ist, d.h. bei der vorliegenden Ausführungsform kegelstumpfförmige Form aufweist.

Die zentrische Öffnung 8 des Buchsenelements 3 besitzt vier über den Umfang verteilte Nuten, welche sich gemäß Fig. 3 bis zu dem dem Außenprofil der Dichtlippe angepaßten Bereich erstrecken. Hierdurch wird eine Verbesserung der Elastizität des Buchsenelements erzielt.

Zur Geräuschdämpfung bestehen das Steckelement 2 und das Buchsenelement 3 aus zwei verschiedenen Kunststoffmaterialen.

Fig. 5 zeigt die vormontierte Einheit, d.h. das Buchsenelement 3 mit dem Haltering 10 ist in den oberen Zwischenraum zwischen zwei benachbarten Halterippen 9 des Steckelements 2 eingesetzt. In dieser vormontierten Form läßt sich die aus Steckelement 2 und Buchsenelement 3 bestehende Befestigungsvorrichtung 1 in eine nicht näher dargestellte Öffnung eines Trägers einsetzen, wonach die federnden Arme 5 und 6 sich hinter der Trägeröffnung spreizen und diese im oberen Bereich durch die umlaufende federnde Dichtlippe 4 abgedichtet wird.

Nunmehr läßt sich eine Verkleidungsplatte mit einer entsprechenden Öffnung in den Zwischenraum zwischen die Flansche 19 und 20 des Buchsenelements 3 einbringen, wonach dann gemäß Fig. 6 der richtige Abstand zu dem Träger dadurch hergestellt wird, daß das Buchsenelement 3 weiter auf das Kopfteil 7 des Steckelements 2 aufgesteckt wird und sich die entsprechende Halterippe 9 hinter dem Haltering 10 des Buchsenelements 3 einlagert.

Aus Fig. 6 geht in diesem Zusammenhang hervor, wie sich der innere Bereich des Flanschs 20 an den Außenumfang der elastischen Dichtlippe 4 anpaßt, so daß das Buchsenelement 3 sehr dicht an den oberen Bereich der Dichtlippe 4 herangeführt werden kann. Fig. 6 zeigt den Endzustand der erfindungsgemäßen Befestigungsvorrichtung 1.

Soll die Verbindung gelöst werden, so kann das Buchsenelement 3 nach oben abgezogen werden (gestrichelte Darstellung) bis der umlaufende Haltering 10 die letzte Halterippe 9 des Kopfteils 7 des Steckelements 2 freigibt.

Der Einsatz des Steckelements 2 in eine Trägeröffnung wird durch den schräg zulaufenden Einführungsbereich 18 erleichtert; das Aufbringen des Buchsenteils 3 auf das Kopfteil 7 des Steckelements 2 läßt sich mit Hilfe der Einführschräge 11 des Kopfteils 7 leicht bewerkstelligen. Damit ist eine schnelle und einfache Montage der erfindungsgemäßen Befestigungsvorrichtung 1 möglich, wobei jedoch auch die gesamte Einheit wiederum beschädigungsfrei voneinander getrennt werden kann.

## Patentansprüche

1. Befestigungsvorrichtung aus Kunststoff zum Befestigen einer Wandverkleidung an einem Karosserieteil eines Kraftfahrzeuges mit einem in eine Öffnung des Karosserieteils einsetzbaren, gegenüberliegende federnde Befestigungsarme (5) aufweisenden Steckelement (2) mit umlaufender, flanschartiger, kegelstumpfförmiger Dichtlippe (4) und mit einem oberhalb der Dichtlippe angeordneten Kopfteil (7) sowie mit einem die Wandverkleidung halternden Buchsenelement (3), in dessen zentrischer Öffnung (8) das Kopfteil (7) des Steckelements (2) einsetzbar ist,
wobei die zentrische Öffnung (8) des Buchsenelements (3) mindestens einen Haltering (10) aufweist, das Buchsenelement (3) mit zwei im axialen Abstand voneinander liegenden Flanschen (19, 20) versehen ist, der der Dichtlippe (4) des Steckelements (2) zugeordnete Bereich der zentrischen Öffnung (8) des Buchsenelements (3) dem Außenprofil der Dichtlippe (4) angepasst ist, und vier über den Umfang der zentrischen Öffnung (8) verteilte Nuten (21) vorgesehen sind, welche sich bis zu dem dem Außenprofil der Dichtlippe (4) angepassten Bereich erstrecken
**dadurch gekennzeichnet,** daß das Kopfteil (7) des Steckelements (2) als Zylinder ausgebildet und am Außenumfang mit mehreren, in vertikalem Abstand voneinander liegenden Halterippen (9) versehen ist,
daß mindestens eine der Halterippen (9) des Kopfteils (7) des Steckelements (2) hinter dem mindestens einen Haltering (10) des Buchsenelements (3) einlagerbar ist, daß das Steckelement (2) und das Buchsenelement (3) aus zwei verschiedenen Kunststoffmaterialien bestehen, und
daß an der Unterseite der kegelstumpfförmig ausgebildeten Dichtlippe (4) mindestens zwei einander gegenüberliegende, auf den Durchmesser der Öffnung des Trägers abgestellte Zentriernasen (13) angeordnet sind.

2. Befestigungsvorrichtung nach Anspruch 1, **dadurch gekennzeichnet**, daß der Mittelbereich des Zylinders des Kopfteils (7) mit einander gegenüberliegenden Aussparungen (12) versehen ist.

3. Befestigungsvorrichtung nach Anspruch 1, **dadurch gekennzeichnet**, daß ein die beiden Befestigungsarme (5,6) verbindender Mittelkörper (16) mit zwei einander gegenüberliegenden, auf den Durchmesser der Öffnung des Trägers abgestellten Zentrierstegen (17) versehen ist.

## Claims

1. Fastening device which is made of plastic and is intended for fastening a wall panelling on a bodywork part of a motor vehicle, having a plug-in element (2) which can be inserted into an opening of the bodywork part, has mutually opposite resilient fastening arms (5, 6) and is provided with an encircling, flange-like, frustoconical sealing lip (4) and with a head part (7) arranged above the sealing lip, and having a bushing element (3) which secures the wall panelling and into the central opening (8) of which the head part (7) of the plug-in element (2) can be inserted, it being the case that the central opening (8) of the bushing element (3) has at least one retaining ring (10), the bushing element (3) is provided with two axially spaced-apart flanges (19, 20), that region of the central opening (8) of the bushing element (3) which is assigned to the sealing lip (4) of the plug-in element (2) is adapted to the outer profile of the sealing lip (4), and there are provided four grooves (21) which are distributed over the circumference of the central opening (8) and extend as far as the region which is adapted to the outer profile of the sealing lip (4), characterized in that the head part (7) of the plug-in element (2) is designed as a cylinder and, on its outer circumference, is provided with a plurality of vertically spaced-apart retaining ribs (9), in that at least one of the retaining ribs (9) of the head part (7) of the plug-in element (2) can be positioned behind the at least one retaining ring (10) of the bushing element (3), in that the plug-in element (2) and the bushing element (3) consist of two different plastic materials, and in that at least two mutually opposite centring noses (13), which are designed to match the diameter of the opening of the carrier, are arranged on the underside of the frustoconical sealing lip (4).

2. Fastening device according to Claim 1, characterized in that the central region of the cylinder of the head part (7) is provided with mutually opposite cutouts (12).

3. Fastening device according to Claim 1, characterized in that a central body (16) which connects the two fastening arms (5, 6) is provided with two mutually opposite centring webs (17) which are designed to match the diameter of the opening of the carrier.

## Revendications

1. Dispositif de fixation en matière plastique pour fixer un habillage de paroi à une partie de la carrosserie d'un véhicule automobile, comprenant un élément emboîtable (2) pouvant être inséré dans une ouverture de la partie de la carrosserie, présentant des bras de fixation (5) élastiques et opposés, et muni d'une lèvre périphérique tronconique d'étanchement (4) du type aile ; une partie (7) formant tête disposée au-dessus de la lèvre d'étanchement ; ainsi qu'un élément (3) formant douille, qui retient l'habillage de paroi et dans l'orifice central (8) duquel la partie (7) formant tête de l'élément emboîtable (2) peut être insérée,
dispositif dans lequel l'orifice central (8) de l'élément (3) formant douille comporte au moins une bague de retenue (10), l'élément (3) formant douille est pourvu de deux collerettes (19, 20) placées à distance axiale l'une de l'autre,
la région de l'orifice central (8) de l'élément (3) formant douille, qui est affectée à la lèvre d'étanchement (4) de l'élément emboîtable (2), est adaptée au profil extérieur de ladite lèvre d'étanchement (4), et
quatre rainures (21), prévues avec répartition sur le pourtour de l'orifice central (8), s'étendent jusqu'à la région adaptée au profil extérieur de la lèvre d'étanchement (4),
caractérisé par le fait
que la partie (7) formant tête de l'élément emboîtable (2) est réalisée sous la forme d'un cylindre et est dotée, sur le pourtour extérieur, de plusieurs nervures de retenue (9) mutuellement distantes dans le sens vertical ;
qu'au moins l'une des nervures de retenue (9) de la partie (7) formant tête de l'élément emboîtable (2) peut venir se nicher derrière la bague de retenue (10) prévue au minimum sur l'élément (3) formant douille ;
que l'élément emboîtable (2) et l'élément (3) formant douille consistent en deux matières plastiques différentes ; et qu'au moins deux mentonnets de centrage (13), opposés l'un à l'autre et coordonnés avec le diamètre de l'ouverture du support, se trouvent à la face inférieure de la lèvre d'étanchement (4) réalisée de forme tronconique.

2. Dispositif de fixation selon la revendication 1, caractérisé par le fait que la zone centrale du cylindre de la partie (7) formant tête est munie d'échancrures opposées (12).

3. Dispositif de fixation selon la revendication 1, caractérisé par le fait qu'un corps central (16), reliant les deux bras de fixation (5, 6), est pourvu de deux membrures de centrage (17) opposées l'une à l'autre et coordonnées avec le diamètre de l'ouverture du support.
